Europäisches Patentamt

European Patent Office

Office européen des brevets

(19)

(11) Veröffentlichungsnummer: **0 158 770 B1**

# (12) EUROPÄISCHE PATENTSCHRIFT

(45) Veröffentlichungstag der Patentschrift: **28.11.90**

(21) Anmeldenummer: **85100537.1**

(22) Anmeldetag: **19.01.85**

(51) Int. Cl.⁵: **H 04 N 11/00, H 04 N 9/44**

(54) Verfahren zur Modulation und synchronen Demodulation von nach dem Prinzip der Offsetmodulation/-abtastung aufbereiteten Farbfernsehsignalen sowie Anordnung zum Durchführen dieses Verfahrens.

(30) Priorität: **14.04.84 DE 3414271**

(43) Veröffentlichungstag der Anmeldung:
**23.10.85 Patentblatt 85/43**

(45) Bekanntmachung des Hinweises auf die
Patenterteilung:
**28.11.90 Patentblatt 90/48**

(84) Benannte Vertragsstaaten:
**BE DE FR GB IT NL**

(56) Entgegenhaltungen:
**US-A-3 679 816**
**US-A-3 895 298**
**US-A-4 063 279**
**US-A-4 153 911**

(73) Patentinhaber: **ANT Nachrichtentechnik GmbH**
**Gerberstrasse 33**
**D-7150 Backnang (DE)**

(72) Erfinder: **Planthold, Martin, Dipl.-Ing.**
**Stockumerstrasse 232**
**D-4600 Dortmund 50 (DE)**
Erfinder: **Eiberger, Berthold, Dr.-Ing.**
**Im Tiefen See 34**
**D-6100 Darmstadt (DE)**
Erfinder: **Schröder, Hartmut, Dr.-Ing.**
**Weisse Taube 30**
**D-4600 Dortmund 50 (DE)**

**Beschreibung**

Die Erfindung betrifft ein Verfahren gemäß dem Oberbegriff des Patentanspruchs 1 sowie Anordnungen zum Durchführen dieses Verfahrens. Ein solches Verfahren ist bekannt aus der US-A-3 895 298.

Aus der US-A-3 895 298 ist ein Verfahren zur Modulation und synchronen Demodulation von amplitudenmodulierten Signalen in einem Nachrichtenübertragungssystem bekannt, bei dem zur Frequenzrückgewinnung ein übliches Referenzsignal und zur Phasenrückgewinnung ein im Kanal zusätzlich übertragenes Referenzsignal herangezogen wird. Das zusätzliche Referenzsignal wird dort in Zeitintervallen übertragen, in denen keine Informationen übertragen werden. Zur Einlagerung der Schwingungszüge zur Phasenrückgewinnung ist sendeseitig eine Einblendschaltung vorgesehen. Empfangsseitig ist eine Frequenzrückgewinnungs- sowie eine Phasenrückgewinnungsschaltung vorhanden.

Zur kompatiblen Erhöhung der Detailauflösung für eine Farbfernsehübertragung wurde in Fernseh- und Kinotechnik, 34. Jahrgang, Nr. 2/1980, Seiten 41 bis 48, das Verfahren der Offsetabtastung unter Zuhilfenahme der planaren Vor- und Nachfilterung und Vollbildwiedergabe angegeben. Bei dem angegebenen Verfahren wird die gewünschte Signalinformation über einen bandbegrenzten Kanal übertragen, wobei ein Teil der Signalinformation nicht in der spektralen Originallage übermittelt wird, sondern durch die Offsetabtastung in eine trägerfrequente Lage versetzt wird. Die Abtastfrequenz liegt bei dem angegebenen Verfahren außerhalb der Bandbreite des Übertragungskanales. Zur Rekonstruktion der Signalinformation in die spektrale Originallage ist eine empfangsseitige synchrone Nachabtastung notwendig.

Aufgabe der Erfindung ist es, ein Verfahren ausgehend vom Oberbegriff des Patentanspruchs 1 anzugeben, welches die empfängerseitige Nachabtastung/Demodulation synchron zur senderseitigen Abtastung/Modulation unter Beibehaltung der Kompatibilität zu bestehenden Fernsehnormen (NTCS, SECAM, PAL) ermöglicht sowie eine geeignete Anordnung zum Durchführen dieses Verfahrens aufzeigt.

Diese Aufgabe wird bezüglich des Verfahrens durch die kennzeichnenden Merkmale des Patentanspruchs 1 gelöst und bezüglich der Anordnung durch die Merkmale des Patentanspruchs 3. Die übrigen Ansprüche geben vorteilhafte Ausgestaltungen des Verfahrens, bzw. der Anordnung, an.

Im Hinblick auf das Satellitenfernsehen mit separater Komponentenübertragung wurde auf der International Broadcasting Convention, Brighton, 1982, in dem Beitrag "Multiplexed Analogue components — A New Video Coding System For Satellite Broadcasting" (Tagungsband, Seiten 158 bis 164) unter Bezugnahme auf das Verfahren der Offsetabtastung eine zum MAC (Multiplexed Analogue Component)-Verfahren kompatible Auflösungserhöhung vorgeschlagen.

Hier wird ein zeilenfrequenter Taktrückgewinnungsburst angegeben, der in seiner Frequenz nicht näher spezifiziert wird.

Das erfindungsgemäße Verfahren hat den Vorteil, daß die Synchronisation von sender- und empfängerseitiger Abtastung/Modulation zu den für bestehende Übertragungs-/Aufzeichnungsverfahren vorgegebenen Bandbreiten kompatibel ist.

Anhand der Zeichnungen wird die Erfindung nun näher erläutert. Es zeigen

Fig. 1 ein Blockschaltbild einer Anordnung zum Durchführen des erfindungsgemäßen Verfahrens,

Fig. 2 ein Blockschaltbild der senderseitigen Einblendung der Referenzzeilen (RZ),

Fig. 3 ein Blockschaltbild zur sender- bzw. empfängerseitigen Gewinnung der Abtast-/Modulationsfrequenz,

Fig. 4 die Darstellung der Offsetmodulation,

Fig. 5 ein Blockschaltbild zur Anordnung der senderseitigen Einblendung der Referenzzeilen (RZ) und des Offsetmodulators,

Fig. 6 Lage der Referenzschwingung bezüglich des Nyquist- und Übertragungskanales,

Fig. 7 ein Blockschaltbild zur empfängerseitigen Phasenrückgewinnung.

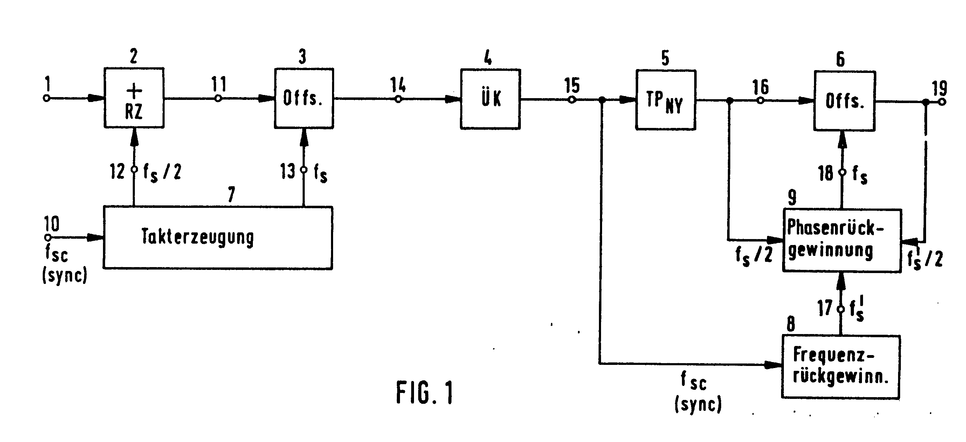

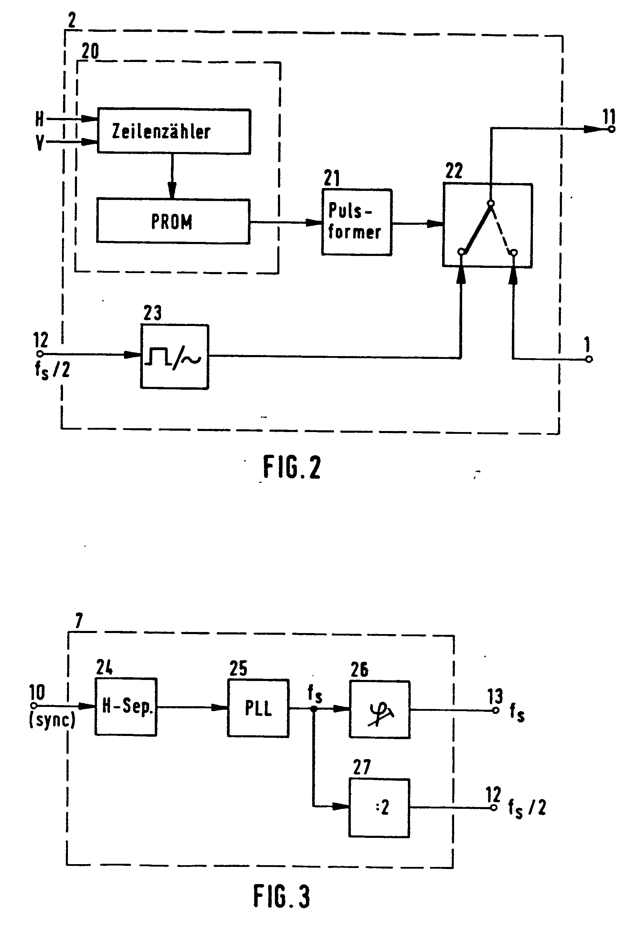

Das Blockschaltbild nach Figur 1 dient zur Erläuterung der Erfindung. Der Eingangsklemme 1 wird das Bildsignal zugeführt. Mittels einer Einblendschaltung 2 werden in der vertikalen Austastlücke pro Halbbild in eine freie Zeile (RZ = Referenzzeile, z.B. Zeilen 15,328) für die Dauer dieser Zeile Schwingungszüge der Frequenz $f_s/2$ (Klemme 12) eingelagert. Eine mögliche Realisierung der Einblendschaltung 2 zeigt Figur 2. Über eine Zeilendecodierung 20, die aus einem Zeilenzähler, der mit zeilen- und bildfrequenten Impulsen (H, V) betrieben wird, und einem PROM besteht, werden die Zeilen erkannt, in die die Schwingungszüge der Frequenz $f_s/2$ eingelagert werden sollen. Von einem Pulsformer 21 am Ausgang der Zeilendecodierung 20 wird ein Schalter 22 derart geschaltet, daß für die Dauer der gewünschten Zeilen sinusförmige Schwingungszüge der Frequenz $f_s/2$ aus einem Rechteck/Sinuswandler 23 an Klemme 11 zur Verfügung stehen. Dazu ist der Mittenkontakt des Schalters 22 an die Klemme 11 (Eingang des nachfolgenden Offsetmodulationsbausteins 3) angeschlossen. Die Frequenz $f_s/2$, ebenso wie die Frequenz $f_s$, werden einer Takterzeugung 7 entnommen, die für eine phasenstarre Verkopplung der Frequenzen $f_s$ und $f_s/2$ mit der Zeilenfrequenz sorgt. Die Takterzeugung arbeitet nach bekannter PLL-Technik und erhält über Klemme 10 als Referenz den Farbburst oder das Synchronsignal (sync). Figur 3 zeigt eine mögliche Realisierung der Takterzeugung für den Fall der Synchronisation auf das Syncsignal. Über eine Separationseinrichtung 24 für Horizontalsynchronisationsimpulse (H) werden der PLL 25 zeilenfrequente Impulse als Referenzsignal zugeführt. Die erzeugte Schwingung der Frequenz $f_s$ wird über einen Phasenschieber 26, der eine definierte Phaseneinstellung ermöglicht, der Klemme 13 zugeführt. An Klemme 12 steht eine Schwingung der Frequenz

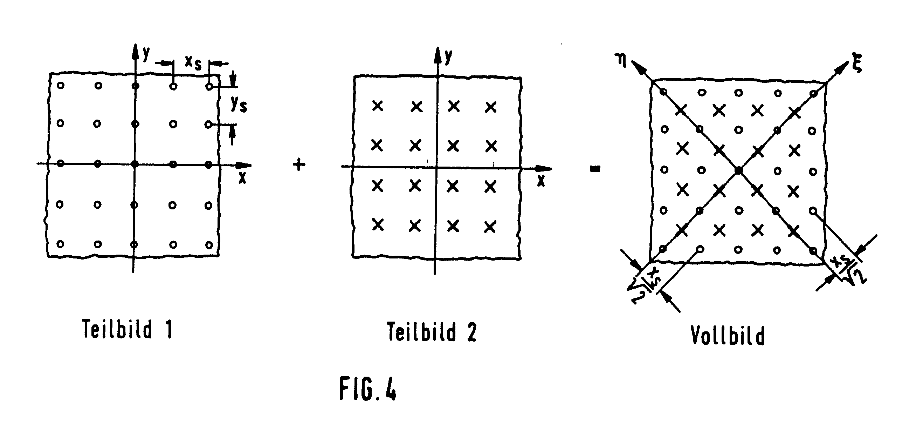

$f_s/2$ zur Verfügung, die mittels eines Teilers 27 aus der Frequenz $f_s$ erzeugt wird. Das an Klemme 11 stehende Signal wird dann in einem senderseitigen Baustein 3 aufbereitet und in Offsetlage versetzt. Ein solcher Baustein ist für den Fall der Offsetmodulation in der Patentanmeldung DE-A-3 344 524 beschrieben. Die Darstellung der Offsetmodulation mittels der Offset-Modulationsfrequenz $f_s$ im Ortsbereich Zeigt Fig. 4. Dabei sind die Orte der Sinusschwingung mit gleichen Phasen innerhalb zweier aufeinanderfolgender Teilbilder dargestellt. Die Kreise und Kreuze symbolisieren die Orte gleicher Phase. Wie Fig. 4 zeigt, sind die Orte gleicher Phase beim Teilbild 1 gegeben durch die Wertepaare $(m x_s ; n y_s)$ in der x, y-Ebene mit $m = 0, 1, 2, 3,...$ und $n = 0, 1, 2, 3,.....$ Beim Teilbild 2 sind demgegenüber die Orte gleicher phase durch die Wertepaare $(1/2 + m)x_s$; $(1/2 + n)y_s$ gegeben. Ein Vollbild setzt sich aus den Teilbildern 1 und 2 zusammen (rechtes Bild). Die Offsetmodulationsfrequenz in x-Richtung wird beispielsweise zu $f_s^x = 6,75$ MHz gewählt. Dies ist die halbe Taktfrequenz des nach CCIR vorgeschlagenen Abtasttaktes innerhalb digitaler Studios. Die Offsetmodulation gestattet es, statt des üblichen Zeilensprungverfahrens mit Hilfe der planaren Bandbegrenzung bei gleicher Informationsmenge die örtliche Auflösung in Richtung der $f^x$- und $f^y$-Achsen zu optimieren.

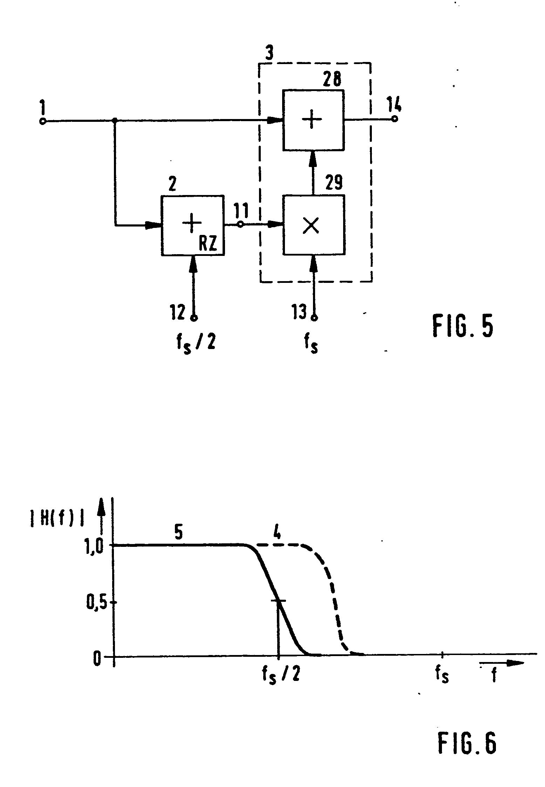

Figur 5 zeigt die Anordnung von Einblendschaltung und senderseitigem Offsetmodulator 3. Das Bildsignal (Klemme 1) wird der Addierstufe 28 zugeführt und gleichzeitig, nachdem in der Einblendschaltung 2 in die vorgesehenen Zeilen die Schwingungszüge der Frequenz $f_s/2$ eingefügt wurden, durch den Multiplizierer 29 mit der Frequenz $f_s$ von Klemme 13 aus in Offsetlage moduliert. Das Multipliziererausgangssignal wird dann der Addierstufe 28 zugeführt, an deren Ausgangsklemme 14 das senderseitig aufbereitete Signal zur Übertragung zur Verfügung steht.

Über den Phasenschieber 26 in Figur 3 wird eine feste phasenverschiebung zwischen den Schwingungen der Frequenz $f_s/2$ vor und nach der Modulation eingestellt. Diese Phasenverschiebung kann prinzipiell beliebig sein und muß dann auf der Empfängerseite durch eine entsprechende entgegen gerichtete Phasenverschiebung berücksichtigt werden. Vorzugsweise wird die Phasenverschiebung zu Null gewählt.

Figur 6 zeigt die Lage der eingelagerten Schwingung der Frequenz $f_s/2$ bezüglich des Übertragungskanales 4 und der empfängerseitigen Nyquistfilterung mittels des Nyquistfilters 5. Die empfängerseitige Frequenzrückgewinnung 8 arbeitet analog zur senderseitigen Takterzeugung. Aus dem an Klemme 15 anstehenden Signal wird der Farbburst (bzw. das Synchronsignal) separiert und die Frequenz $f_s'$ (Klemme 17) über die bekannte PLL-Technik erzeugt. Allerdings ist die Phasenlage der Frequenz $f_s'$ zunächst willkürlich. Anstelle des senderseitigen Phasenschiebers 26 (Figur 3) tritt im Empfänger nun eine Regelschaltung zur Phasenrückgewinnung 9. Prinzipiell ist diese Regelschaltung auch auf der Senderseite denkbar. Nach der Nyquistfilterung 5 wird das Signal über Klemme 16 dem empfängerseitigen Offsetdemodulationsbaustein 6 zugeführt. Dieser arbeitet wie der bereits beschriebene senderseitige Offsetmodulationsbaustein 3. Nach der Demodulation in Baustein 6 ergibt sich für die Schwingung der Frequenz $f_s/2$ wiederum eine Schwingung gleicher Frequenz, die jedoch durch die Phasenlage der Demodulationsfrequenz $f_s'$ gekennzeichnet ist (Schwingung $f_s'/2$). Die Schwingung $f_s'/2$ wird in der Phasenrückgewinnung 9 mit der Schwingung $f_s/2$ (Klemme 16) bezüglich der Phasenlage verglichen und eine Regelung derart in Gang gesetzt, daß sich die Demodulationsfrequenz $f_s$ an Klemme 18 mit der gleichen Phasenlage ergibt wie auf der Senderseite an Klemme 13.

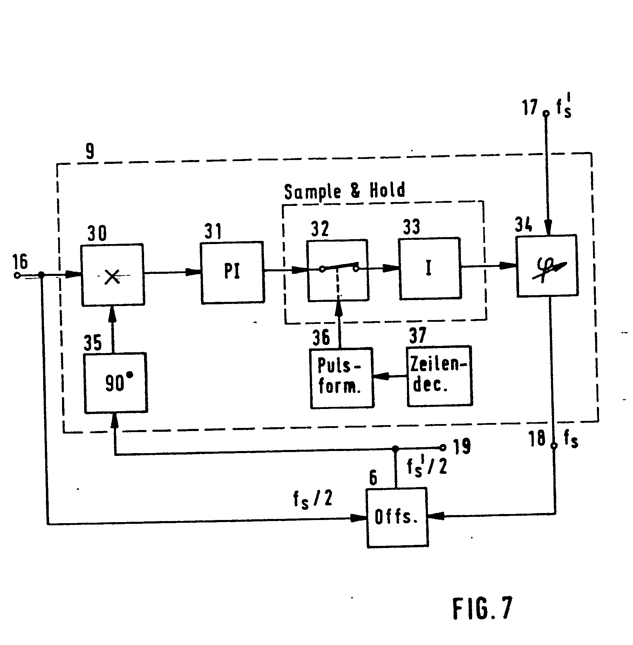

Figur 7 zeigt die Anordnung zur Phasenrückgewinnung 9 zusammen mit der Offsetdemodulation 6. Das an Klemme 16 anliegende Signal der Frequenz $f_s/2$ wird einem als Phasendetektor arbeitenden Multiplizierer 30 an einem ersten Vergleichseingang zugeführt. Andererseits erhält der Multiplizierer 30 an seinem zweiten Vergleichseingang ein durch die Offsetdemodulation 6 erzeugtes Signal $f_s'/2$, das in seiner Phase konstant um 90° in einem Phasenschieber 35 gedreht wurde. Die Phasendrehung um 90° ist notwendig, damit die Regelschaltung ihren stabilen Arbeitspunkt bei einer Phasenverschiebung von 0° findet. Das Multipliziererausgangssignal wird einem Proportional-Integral-Netzwerk 31 zugeführt, das als Regelfilter arbeitet. Das Ausgangssignal des PI-Netzwerkes 31 ist eine zum Phasenunterschied der am Multiplizierer 30 anliegenden Signale proportionale Gleichspannung. Diese Gleichspannung wird über einen gesteuerten Schalter 32 auf ein Integrationsnetzwerk 33 gegeben. Der Schalter 32 und das Integrationsnetzwerk 33 arbeiten zusammen als Sample & Hold-Stufe. Die Steuerung des Schalters 32 erfolgt über einen Zeilendecoder 37 und einen Pulsformer 36 (vgl. hierzu Figur 2) derart, daß der Schalter 32 für die Dauer der Referenzzeilen angeschlossen ist. Mit der in dem Integrationsnetzwerk 33 gespeicherten Gleichspannung wird ein spannungsgesteuerter Phasenschieber 34 gesteuert. Der Phasenschieber 34 weist einen Arbeitsbereich über ± 180° auf und ermöglicht die Regelung der Demodulationsfrequenz $f_s$ (Klemme 18), so daß zwischen den am Multiplizierer 30 anliegenden Signalen kein Phasenunterschied mehr besteht.

Die bisher beschriebenen Anordnungen werden anhand der Offsetmodulation/-demodulation für analoge Signalverarbeitung dargestellt. Es ist grundsätzlich möglich sämtliche Einrichtungen für eine Digitalsignalverarbeitung aufzubauen. Die Modulatoren/Demodulatoren müssen dann durch entsprechende digitale Abtaster/Nachabtaster ersetzt werden.

Das erfindungsgemäße Verfahren eignet sich sowohl zur Übertragung von Fernsehsignalen als auch zur Synchronisierung bei der Wiedergabe bspw. mittels Videorecordern aufgezeichneter Fernsehsignale.

## Patentansprüche

1. Verfahren zur Modulation und synchronen Demodulation von Farbfernsehsignalen, wobei zur Frequenzrückgewinnung ein übliches Referenzsignal (Farbburst, Synchronisationsimpulse) und zur Phasenrückgewinnung ein im Kanal zusätzlich übertragenes Referenzsignal herangezogen wird, dadurch gekennzeichnet, daß für nach dem Prinzip der Offsetmodulation/-abtastung aufbereitete und über einen Nyquistkanal übertragene Farbfernsehsignale das zusätzlich übertragene Referenzsignal aus Schwingungszügen besteht mit einer Frequenz, die gerade gleich der Nyquistfrequenz des Kanals ist.

2. Verfahren nach Anspruch 1, dadurch gekennzeichnet, daß die Schwingungszüge in eine zeile der vertikalen Austastlücke eingelagert werden.

3. Anordnung zum Durchführen des Verfahrens nach Anspruch 1 oder 2, wobei sendeseitig eine Einblendschaltung (2) zur Einlagerung von Schwingungszügen und empfangsseitig eine Frequenzrückgewinnungsschaltung (8) sowie eine Phasenrückgewinnungsschaltung (9) vorgesehen ist, dadurch gekennzeichnet, daß die Einblendschaltung (2) zur Einlagerung von schwingungszügen der halben Offsetmodulations-/abtastfrequenz ($f_s/2$) in eine freie Zeile der vertikalen Austastlücke pro Halbbild geeignet ist, daß die Phaserückgewinnungsschaltung (9) zwei Vergleichseingänge, denen der eingelagerte Schwingungszug ($f_s/2$) über das empfangsseitige Nyquistfilter (5), bzw. der durch die Offsetdemodulation/-nachabtastung in seiner Phasenlage geänderte Schwingungszug ($f_s'/2$), zugeführt ist, und einen steuereingang aufweist, der mit dem aus der Frequenzrückgewinnungsschaltung (8) erhaltenen Signal ($f_s'$) beaufschlagt ist, und daß dem Offsetdemodulations-/nachabtastungsbaustein (6) als Demodulations-/Nachabtastungssignal über einen Steuereingang (18) das Ausgangssignal der Phasenrückgewinnungsschaltung (9) zugeführt ist.

4. Anordnung nach Anspruch 3, dadurch gekennzeichnet, daß die Einblendschaltung (2) eine Zeilendecodierungseinrichtung (2D) aufweist, die aus einem mit zeilen- und bildfrequenten Impulsen (H, V) betriebenen Zeilenzähler und einem PROM zur Zeilenerkennung besteht, daß die Einblendschaltung (2) einen Schalter (22) enthält, dessen Steuereingang über einen Pulsformer (21) mit dem Ausgang der Zeilendecodierungseinrichtung (20) verbunden ist, daß der Mittenkontakt des Schalters (22) mit dem Eingang des sendeseitigen Offsetmodulations-/abtastbausteins (3) verbunden ist, und daß ein erster Schaltkontakt des Schalters (22) mit dem Fernsehsignaleingang (1) und ein zweiter schaltkontakt über einen Rechteck-/sinussignalwandler (23) mit einer Takterzeugungseinrichtung (7) verbunden ist.

5. Anordnung nach Anspruch 3 oder 4, dadurch gekennzeichnet, daß die Takterzeugungseinrichtung (7) aus einer PLL-Schleife (25) besteht, der über eine Separationseinrichtung für Horizontalsynchronimpulse (24) zeilenfrequente Impulse (sync) als Referenzsignal zugeführt sind, daß der Ausgang der PLL-Schleife (25) zum einen mit einem einstellbaren Phasenschieber (26) und zum anderen mit einem Frequenzteiler (27) verbunden ist, sodaß am Ausgang des Phasenschiebers (26) die Offsetmodulations-/abtastfrequenz ($f_s$) und am Ausgang des Frequenzteilers (27) ein Signal der Frequenz der einzulagernden Schwingungszüge ($f_s/2$) abnehmbar ist.

6. Anordnung nach einem der Ansprüche 3, 4 oder 5, dadurch gekennzeichnet, daß der Offsetmodulations-/abtastbaustein (3) aus einem Multiplizierer (29) und einem Addierer (28) besteht, daß ein Eingang des Multiplizierers (29) mit dem Ausgang (11) der Einblendschaltung (2) und ein weiterer Eingang (13) mit dem Ausgang des Phasenschiebers (26) der Takterzeugungseinrichtung (7) verbunden ist, und daß die Eingänge des Addierers (28) mit dem Fernsehsignaleingang (1), bzw. mit dem Ausgang des Multiplizierers (29) verbunden sind.

7. Anordnung nach einem der Ansprüche 3, 4, 5 oder 6, dadurch gekennzeichnet, daß die Phasenrückgewinnungsschaltung (9) einen als Multiplizierer aufgebauten Phasendetektor (30) aufweist, dem die eingelagerten Schwingungszüge ($f_s/2$) direkt und die in der Phasenlage geänderten Schwingungszüge ($f_s'/2$) über einen 90°-Phasenschieber (35) zugeführt werden, daß der Ausgang des Phasendetektors (30) über ein Proportional-Integralnetzwerk (31) mit einer Abtast-Halteschaltung (32, 33) verbunden ist, daß der Steuereingang der Abtast-Halteschaltung (32, 33) über einen Pulsformer (36) mit einem Zeilendecoder (37) verbunden ist, daß der Ausgang der Abtast-Halteschaltung (32, 33) zum Steuereingang eines spannungsgesteuerten Phasenschiebers (34) führt, daß der Eingang dieses Phasenschiebers (34) an den Ausgang der Frequenzrückgewinnungsschaltung (8) angeschlossen ist, und daß der Ausgang des Phasenschiebers (34) an den Steuereingang (18) des Offsetdemodulations-/nachabtastungsbausteins (6) führt.

## Revendications

1. Procédé de modulation et de démodulation synchrone de signaux de télévision en couleurs, dans lequel, pour la récupération de fréquence, on fait appel à un signal de référence habituel (salve de couleur, impulsions de synchronisation) et, pour la récupération de phase, on fait appel à un signal de référence transmis en plus dans le canal, caractérisé par le fait que, pour des signaux de télévision en couleurs préparés selon le principe de la modulation/échantillonnage offset et transmis par un canal de Nyquist, le signal de référence transmis en supplément consiste en trains d'oscillations ayant une fréquence qui est juste égale à la fréquence de Nyquist du canal.

2. Procédé selon revendication 1, caractérisé par le fait que les trains d'oscillations sont déposés dans une ligne de l'intervalle de suppression verticale.

3. Agencement de mise en oeuvre du procédé selon revendication 1 ou 2, dans lequel il est prévu, côté émetteur, un circuit de superposition (2) pour le dépôt de trains d'oscillations et, côté réception, un circuit de récupération de fréquence (8) ainsi qu'un circuit de récupération de phase (9), caractérisé par le fait que le circuit de superposition (2) est approprié au dépôt, pour chaque demi-image, dans une ligne libre de l'intervalle de séparation verticale, de trains d'oscillations à la moitié (f$_s$/2) de la fréquence de modulation/échantillonnage offset, par le fait que le circuit de récupération de phase (9) présente deux entrées de comparaison auxquelles on amène le train d'oscillations déposé (f$_s$/2), cela via le filtre de Nyquist (5) côté réception, ou encore le train d'oscillations (f$_s$'/2) à position de phase modifiée par la démodulation/post-échantillonnage offset, et présente une entrée de commande attaquée par le signal (f$_s$') obtenu du circuit de récupération de fréquence (8), et par le fait qu'on amène au module de démodulation/post-échantillonnage offset (6), en tant que signal de démodulation/post-échantillonnage, via une entrée de commande (18), le signal de sortie du circuit de récupération de phase (9).

4. Agencement selon revendication 3, caractérisé par le fait que le circuit de superposition (2) présente un dispositif de décodage ligne (20) qui est constitué par un compteur de lignes activé par des impulsions ayant la fréquence (H, V) des lignes et des images, et par une PROM, par le fait que le circuit de superposition (2) contient un commutateur (22) dont l'entrée de commande est reliée, par l'intermédiaire d'un formateur d'impulsions (21), à la sortie du dispositif de décodage lignes (20), par le fait que le contact médian du commutateur (22) est relié à l'entrée du module de modulation/échantillonnage offset (3) côté émetteur, et par le fait qu'un premier contact de commutation du commutateur (22) est relié à l'entrée (1) de signal de télévision, et un deuxième contact de commutation est relié à un dispositif générateur de rythme (7), par l'intermédiaire d'un convertisseur de signal rectangulaire/sinus (23).

5. Agencement selon revendication 3 ou 4, caractérisé par le fait que le dispositif générateur de rythme (7) est constitué par une boucle PLL (25) à laquelle sont amenées, en tant que signal de référence, via un dispositif de séparation pour impulsions de synchronisation horizontale (24), des impulsions (sync) à la fréquence "lignes", par le fait que la sortie de la boucle PLL (25) est reliée d'une part à un déphaseur réglable (26) et, d'autre part, à un diviseur de fréquence (27), de sorte que la fréquence de modulation/échantillonnage offset (f$_s$) peut être prélevée à la sortie du déphaseur (26) et qu'un signal ayant la fréquence des trains d'oscillations à déposer (f$_s$/2) peut être prélevé à la sortie du diviseur de fréquence (27).

6. Agencement selon l'une des revendications 3, 4 ou 5, caractérisé par le fait que le module de modulation/échantillonnage offset (3) est constitué par un multiplicateur (29) et par un additionneur (28), par le fait qu'une entrée du multiplicateur (29) est reliée à la sortie (11) du circuit de superposition (2) et une autre entrée (13) est reliée à la sortie du déphaseur (26) du dispositif générateur de rythme (7), et par le fait que les entrées de l'additionneur (28) sont reliées à l'entrée de signal de télévision (1) et respectivement à la sortie du multiplicateur (29).

7. Agencement selon l'une des revendications 3, 4, 5 ou 6, caractérisé par le fait que le circuit de récupération de phase (9) présente un détecteur de phase (30) construit en tant que multiplicateur, auquel les trains d'oscillations déposés (f$_s$/2) sont amenés directement, et auquel les trains d'oscilla-tions (f$_s$'/2) à position de phase modifiée sont amenés par l'intermédiaire d'un déphaseur de 90° (35), par le fait que la sortie du détecteur de phase (30) est reliée, via un réseau proportionnel-intégral (31), à un circuit d'échantillonnage-maintien (32, 33), par le fait que l'entrée de commande du circuit d'échantillonnage-maintien (32, 33) est reliée à un décodeur "ligne" (37) par l'intermédiaire d'un formateur d'impulsions (36), par le fait que la sortie du circuit d'échantillonnage-maintien (32, 33) conduit à l'entrée de commande d'un déphaseur commandé par tension (34), par le fait que l'entrée de ce déphaseur (34) est raccordée à la sortie du circuit de récupération de fréquence (8), et par le fait que la sortie du déphaseur (34) conduit à l'entrée de commande (18) du module de démodulation/post-échantillonnage offset (6).

**Claims**

1. A method of modulating and synchronously demodulating colour television signals, with a conventional reference signal (chrominance burst, sync pulses) being utilised for frequency recovery and a reference signal additionally transmitted in the channel being utilised for phase recovery, characterised in that, for colour television signals processed according to the principle of offset modulation/offset sampling and transmitted over a Nyquist channel, the additionally transmitted reference signal is composed of oscillation trains at a frequency just equal to the Nyquist frequency of the channel.

2. A method according to claim 1, characterised in that the oscillation trains are embedded in a line of the vertical blanking interval.

3. An arrangement for implementing the method according to claim 1 or 2, wherein an insertion circuit (2) for embedding oscillation trains is provided at the transmitting end and a frequency recovery circuit (8) and a phase recovery circuit (9) are provided at the receiving end, characterised in that the insertion circuit (2) is suitable for embedding oscillation trains at one-half the offset modulation/sampling frequency (f$_s$/2) in a free line of the vertical blanking interval per field; the phase recovery circuit (9) has two comparison inputs to which is fed the embedded oscillation train (f$_s$/2) via the Nyquist filter (5) at the receiving end and the oscillation train (f$_s$'/2) whose phase position has been changed by the offset demodulation/post-sampling, and includes a control input to which is fed the signal ($f_s'$) obtained from the frequency recovery circuit (8); and the offset demodulation/post-sampling module (6) receives, via a control input (18), the output signal of the phase recovery circuit (9) as the demodulation/post-sampling signal.

4. An arrangement according to claim 3, characterised in that the insertion circuit (2) includes a line decoding device (20) which is composed of a line counter operated with line and image frequency pulses (H, V) and a PROM for line detection; the insertion circuit (2) includes a switch (22) whose control input is connected, via a pulse shaper (21), with the output of the line decoding circuit (20); the center contact of the switch (22) is connected with the input of the offset modulation/sampling module (3) at the transmitting end; a first switch contact of switch 22 is connected with the video signal input (1) and a second switch contact is connected, via a rectangular/sinusoidal signal converter (23), with a clock pulse generator device (7).

5. An arrangement according to claim 3 or 4, characterised in that the clock pulse generating device (7) is composed of a PLL loop (25) which, via a separating device for horizontal sync pulses (24), receives line frequency pulses (sync) as reference signals; the output of the PLL loop (25) is connected, on the one hand, with a settable phase shifter (26) and, on the other hand, with a frequency divider (27), so that the offset modulation/sampling frequency ($f_s$) can be obtained at the output of the phase shifter (26) and a signal at the frequency of the oscillation trains to be embedded ($f_s/2$) can be obtained at the output of the frequency divider (27).

6. An arrangement according to one of claims 3, 4 or 5, characterised in that the offset modulation/sampling module (3) is composed of a multiplier (29) and an adder (28); one input of the multiplier (29) is connected with the output (11) of the insertion circuit (2) and a further input (13) of the multiplier is connected with the output of the phase shifter (26) of the clock pulse generating device (7); and the inputs of the adder (28) are connected with the video signal input (1) or with the output of the multiplier (29), respectively.

7. An arrangement according to one of claims 3, 4, 5, or 6, characterised in that the phase recovery circuit (9) is provided with a phase detector (30) in the form of a multiplier which receives the embedded oscillation trains ($f_s/2$) directly and the oscillation trains with changes in phase ($f_s'/2$) via a 90° phase shifter (35); the output of the phase detector (30) is connected via a proportional/integral network (31), with a sample and hold circuit (32, 33); the control input of the sample and hold circuit (32, 33) is connected, via a pulse shaper (36), with a line decoder (37); the output of the sample-and-hold circuit (32, 33) leads to the control input of a voltage controlled phase shifter (34); the input of said phase shifter (34) is connected with the output of the frequency recovery circuit (8); and the output of the phase shifter (34) leads to the control input (18) of the offset demodulation/post-sampling module (6).

FIG. 1

**FIG.2**

**FIG.3**

Teilbild 1  +  Teilbild 2  =  Vollbild

FIG. 4

FIG. 5

FIG.6

4

**FIG. 7**